Europäisches Patentamt

European Patent Office

Office européen des brevets

(19)

(11) Numéro de publication: **0 057 801**
**B1**

(12) **FASCICULE DE BREVET EUROPEEN**

(45) Date de publication du fascicule du brevet: **14.12.83**

(51) Int. Cl.³: **F 28 F 9/00, F 28 B 1/06,**
**F 28 C 1/14**

(21) Numéro de dépôt: **81401972.5**

(22) Date de dépôt: **10.12.81**

(54) Echangeur de chaleur comportant des tubes en matière plastique et son application à un réfrigérant atmosphérique.

(30) Priorité: **24.12.80 FR 8027477**

(43) Date de publication de la demande:
**18.08.82 Bulletin 82/33**

(45) Mention de la délivrance du brevet:
**14.12.83 Bulletin 83/50**

(84) Etats contractants désignés:
**AT BE CH DE FR GB IT LI LU NL SE**

(56) Documents cités:
**DE - A - 1 936 137**
**DE - A - 2 602 058**
**FR - A - 2 362 358**
**FR - A - 2 405 451**
**FR - A - 2 434 352**
**FR - A - 2 437 596**
**GB - A - 1 272 610**
**GB - A - 2 049 148**
**US - A - 3 026 858**
**US - A - 3 857 253**

(73) Titulaire: **HAMON-SOBELCO S.A. Société dite:**
**50-58, Rue Capouillet**
**B-1060 Bruxelles (BE)**

(72) Inventeur: **Bouton, Franz Materne Florentin**
**Ghislain**
**8 Rue des Pommiers**
**B-7490 Braine-Le-Comte (BE)**
Inventeur: **Hery, Gérard Julien**
**24 Rue de Praque**
**F-93160 Noisy-Le-Grand (FR)**
Inventeur: **Palumby, Zoltan**
**32 Promenade Monalisa**
**F-78000 Versailles (FR)**

(74) Mandataire: **Polus, Camille et al,**
**c/o Cabinet Lavoix 2, Place d'Estienne d'Orves**
**F-75441 Paris Cedex 09 (FR)**

Courier Press, Leamington Spa, England.

## Echangeur de chaleur comportant des tubes en matière plastique et son application à un réfrigérant atmosphérique

La présente invention concerne un échangeur de chaleur entre un premier fluide et au moins un second fluide, du type comprenant une batterie horizontale de tubes de grande longueur réunis de distance en distance par des dispositifs d'entretoisement, le premier fluide circulant à l'intérieur des tubes et le second fluide traversant la batterie transversalement par rapport aux tubes, et elle se rapporte également à un réfrigérant atmosphérique comportant au moins un échangeur de chaleur de ce type.

Les réfrigérants atmosphériques, qui sont utilisés pour refroidir des eaux industrielles par l'air atmosphérique, peuvent être soit du type "humide" dans lequel l'eau à refroidir est mise directement en contact avec l'air atmosphérique, soit du type "sec" dans lequel l'eau circule à l'intérieur de tubes autour desquels circule l'air atmosphérique, soit encore du type "mixte" qui regroupe ces deux techniques. Dans les réfridgérants du type "sec" et du type "mixte", on utilise en règle générale des échangeurs composés de tubes métalliques soit à ailettes, soit lisses. Dans ces deux cas, pour des raisons techniques, corrosion interne et externe notamment, et pour des raisons économiques, on tend à substituer à ces deux types de tubes des tubes lisses en matière plastique. Cependant, la réalisation de telles batteries de tubes lisses en matière plastique pose de délicats problèmes techniques du fait que ces matières présentent un coefficient de dilatation thermique élevé et que, pour être intéressantes sur le plan financier, ces batteries doivent être réalisées à partir de tubes de très grande longueur. Par exemple, c'est ainsi qu'un tube d'une longueur de l'ordre d'une quinzaine de mètres subit un allongement supérieur à une dizaine de centimètres lorsqu'il passe d'une température d'environ 15 à 20°C à une température d'environ 90°C. Dans ces conditions, on comprend que l'implantation de telles batteries de tubes en matière plastique dans un réfrigérant est très difficile à réaliser puisque les tubes vont subir un allongement de cet ordre lorsque le réfrigérant va passer de son état hors service à son état de fonctionnement. Si aucune précaution particulière n'est prise et que ces batteries de tubes en matière plastique sont montées de façon identique aux batteries traditionnelles à tubes métalliques à ailettes, les tubes, qui sont réunis de distance en distance par des dispositifs d'entretoisement pour les maintenir parfaitement rectilignes et parallèles les uns aux autres, vont en fonctionnement prendre une flèche entre les dispositifs d'entretoisement, ce qui va modifier complètement la géométrie des passages d'air ménagés entre les tubes et nuire considérablement à la capacité d'échange thermique de la batterie, c'est-à-dire qu'en pratique une telle solution est inacceptable. D'autre part, en cas d'arrêt de l'installation par basse température extérieure, les tubes, en se contractant, exercent des efforts très élevés sur l'ossature de support à laquelle la batterie est fixée à chaque extrémité.

Pour remédier à ces inconvénients, on a déjà proposé, dans la demande de brevet FR—A 2 405 451 (77/30 221) un échangeur de chaleur comprenant une batterie de tubes rectilignes dont une extrémité est raccordée à une première boîte de connexion qui est divisée par au moins une cloison en une chambre d'entrée et une chambre de sortie du premier fluide circulant á l'intérieur des tubes, et dont l'autre extrémité est raccordée à une seconde boîte de connexion, ladite première boîte de connexion étant montée de façon fixe sur une structure de support et la batterie de tubes ainsi que ladite seconde boîte de connexion étant suspendues librement à ladite structure de support.

Ce dispositif permet effectivement de maintenir en position les tubes de la batterie grâce à la fois à la possibilité de libre déplacement horizontal et à la possibilité de rotation autour des organes de suspension (pour répondre à la différence de dilatation entre les tubes les plus bas et les tubes les plus haut de la batterie).

Cependant, ce dispositif est d'un montage et d'un réglage difficiles. C'est la raison pour laquelle l'invention a pour but de chercher un dispositif d'un montage et d'un réglage plus simples.

A cet effet, la présente invention a pour objet un échangeur de chaleur entre un premier fluide et au moins un second fluide, du type comprenant

a) une batterie horizontale de tubes rectilignes de grande longueur, réunis de distance en distance par des dispositifs d'entretoisement et dans lesquels circule le premier fluide,

b) une structure de support pour cette batterie,

c) une première boîte de connexion à laquelle sont raccordés de façon étanche lesdits tubes à l'une de leurs extrémités et divisée par au moins une cloison en au moins une chambre d'entrée et une chambre de sortie du premier fluide, ladite boîte de connexion étant montée de façon fixe sur ladite structure de support, et

d) une seconde boîte de connexion à laquelle sont raccordés de façon étanche lesdits tubes à leurs autres extrémités, ladite second boîte de connexion étant montée de façon mobile par rapport à ladit structure de support, ledit échangeur étant caractérisé en ce que ladite structure de support comprend au moins deux poutres horizontales parallèles à la batterie de tubes, disposées de part et d'autre de cette batterie et sur lesquelles reposent la première boîte de connexion, les dispositifs d'entretoisement et la seconde boîte de connexion, les dispositifs d'entretoisement étant flexibles dans la direction des tubes et reposant sur lesdites poutres par des patins de glissement, et la seconde boîte de connexion étant munie de part et d'autre de tronçons d'arbres de rotation horizontaux et orthogonaux aux tubes, tourillonnant dans des paliers qui sont montés sur lesdites poutres de façon mobile dans la direction des tubes.

Un tel agencement permet d'assurer les mêmes déplacements de dispositifs d'entretoisement et de la seconde boîte de connexion que dans la demande de brevet FR—A 2 405 451 et donc de répondre à la fois à la dilatation des tubes et à leur dilatation différente suivant leur position dans la batterie. Mais, cet agencement permet de simplifier considérablement le montage de l'échangeur, ainsi que le réglage de l'écart entre les dispositfs d'entretoisement.

En outre, dans une forme avantageuse de la présente invention, les deux poutres sont maintenues entre elles par au moins deux poutres transversales qui sont disposée à leurs extrémités, de façon à former un cadre rigide sur lequel reposent la batterie de tubes et les deux boîtes de connexion. Ceci permet d'effectuer le montage en usine de l'échangeur et de le transporter aisément vers son lieu d'installation. De plus, ce cadre contribue avantageusement à la rigidité de l'ossature du réfrigérant.

L'invention a également pour objet un réfrigérant atmosphérique du type comprenant une chambre pourvue à sa base d'au moins une entrée d'air, un dispositif d'échange thermique entre un fluide et l'air atmosphérique disposé à l'intérieur de la chambre, et des moyens pour évacuer l'air atmosphérique à la partie supérieure de la chambre, caractérisé en ce que le dispositif d'échange thermique comprend au moins un échangeur de chaleur tel que défini ci-dessus.

D'autres caractéristiques et avantages de l'invention ressortiront de la description qui va suivre, faite en se référant aux dessins annexés, donnés uniquement á titre d'exemple, et sur lesquels:

la Fig. 1 est une vue en coupe longitudinale d'un réfrigérant atmosphérique comportant un échangeur de chaleur suivant l'invention;

la Fig. 2 est une coupe suivant 2—2 de la Fig. 1; à plus grande échelle;

la Fig. 3 est une vue à plus grande échelle de l'échangeur du réfrigérant de la Fig. 1;

la Fig. 4 est une vue en coupe à plus grande échelle montant le système de montage de la seconde boîte de connexion de l'échangeur de la Fig. 3;

la Fig. 5 est une vue en coupe suivant 5—5 de la Fig. 4; et

la Fig. 6 est une vue partielle en perspective montrant le système de montage d'un dispositif d'entretoisement de l'échangeur de la Fig. 3.

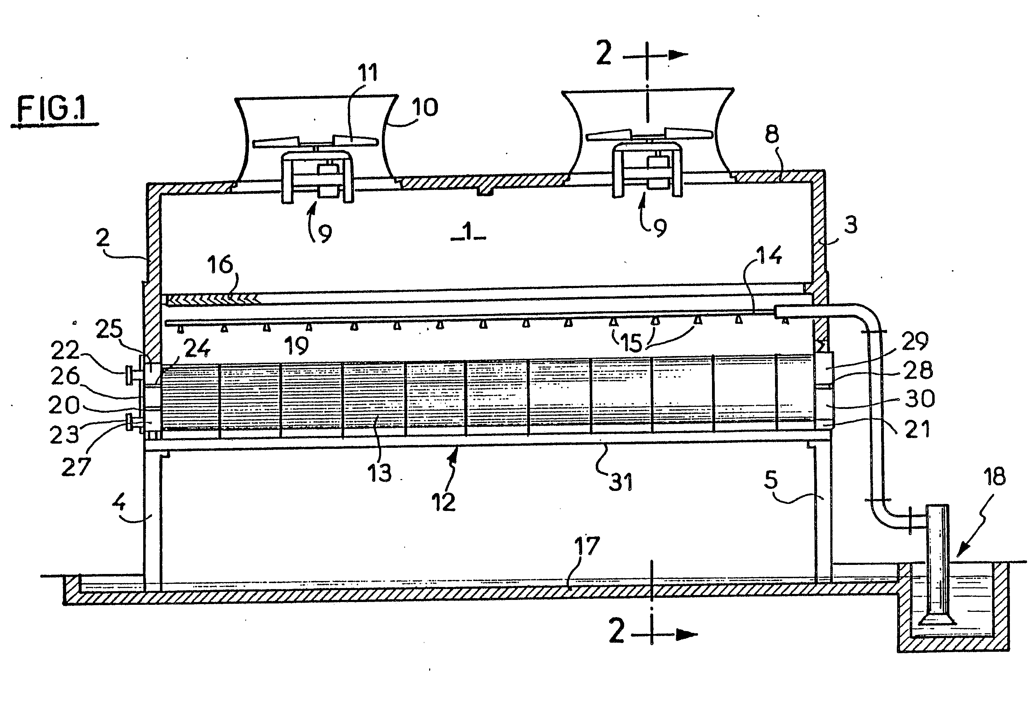

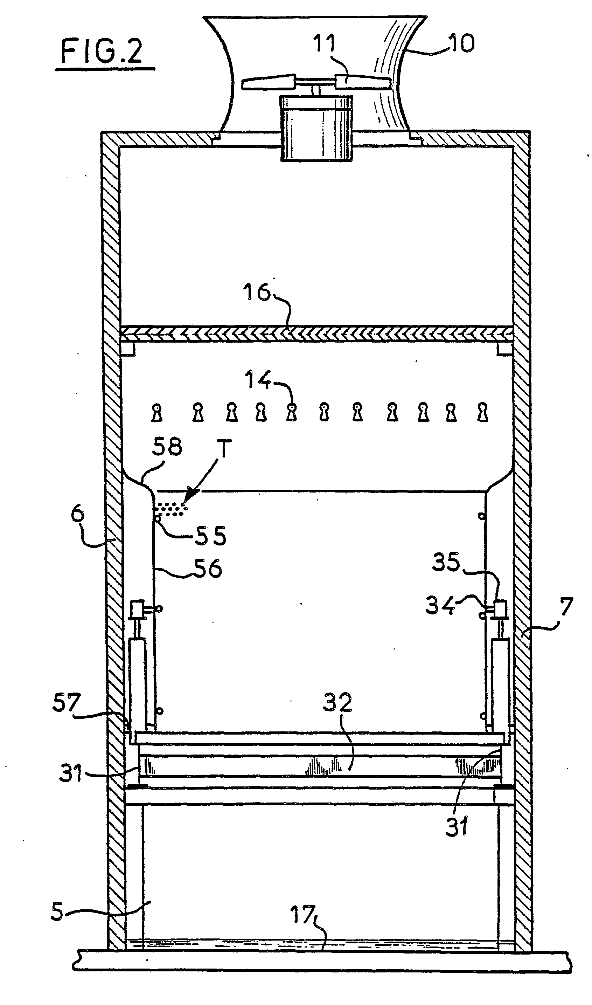

Le réfrigérant atmosphérique à tirage mécanique représenté sur les Fig. 1 et 2 comprend une chambre 1 constituée par deux parois d'extrémité 2, 3, ouvertes à leur partie inférieure pour définir deux entrées d'air 4, 5, deux parois latérales 6, 7 et une paroi supérieure 8 percée de deux ouvertures 9 prolongées par des viroles 10 dans lesquelles sont montés deux ventilateurs d'aspiration 11.

A l'intérieur de la chambre 1 est disposé un échangeur de chaleur 12 comprenant une batterie de tubes 13 s'étendant sur toute la longueur de la chambre, cet échangeur de chaleur étant surmonté par un réseau 14 de tubes de distribution d'eau pourvus d'ajutages de dispersion 15 et par des panneaux séparateurs de gouttes 16. Le réfrigérant 1 est complété à sa base par un bassin 17 destiné à recueillir l'eau provenant du réseau de distribution 14 et par un circuit 18 de recyclage de l'eau qui alimente ce réseau de distribution.

La batterie de tubes 13 est constituée de tubes lisses en matière plastique T, ces tubes rectilignes et parallèles les uns aux autres étant réunis de distance en distance par des dispositifs d'entretoisement 19 et étant fixés de façon étanche à leurs deux extrémités dans une première boîte de connexion 20 et une seconde boîte de connexion 21. La première boîte de connexion 20 comporte des organes 22, 23 permettant de la raccorder à une conduite d'admission et à une conduite d'évacuation d'eau respectivement (non représentées). Dans le mode de réalisation représenté à la Fig. 1, la boîte de connexion 20, comporte en outre deux cloisons horizontales 24 la divisant en trois chambres superposées 25, 26, 27, tandis que l'autre boîte de connexion 21 est divisée par une cloison médiane horizontale 28 en deux chambres superposées 29, 30. Avec cet agencement classique, en fonctionnement l'eau effectue quatre passes ou parcourt quatre fois la longueur. de la batterie 13 en circulant à l'intérieur des quatre faisceaux de tubes superposés compris entre les cloisons des deux boîtes de connexion.

Comme représenté sur les Fig. 1, 2 et 3, les dispositifs d'entretoisement 19 des tubes, ainsi que les boîtes de connexion 20 et 21 sont supportées par deux poutrelles en I 31 disposées horizontalement et le long des parois latérales 6 et 7. Ces poutrelles 31 sont maintenues entre elles par des traverses 32, cylindriques dont deux sont disposées aux deux extrémités des poutrelles 31. L'ensemble des poutrelles 31 et des traverses 32 forme ainsi un cadre rigide qui sert de structure de support à l'échangeur 12.

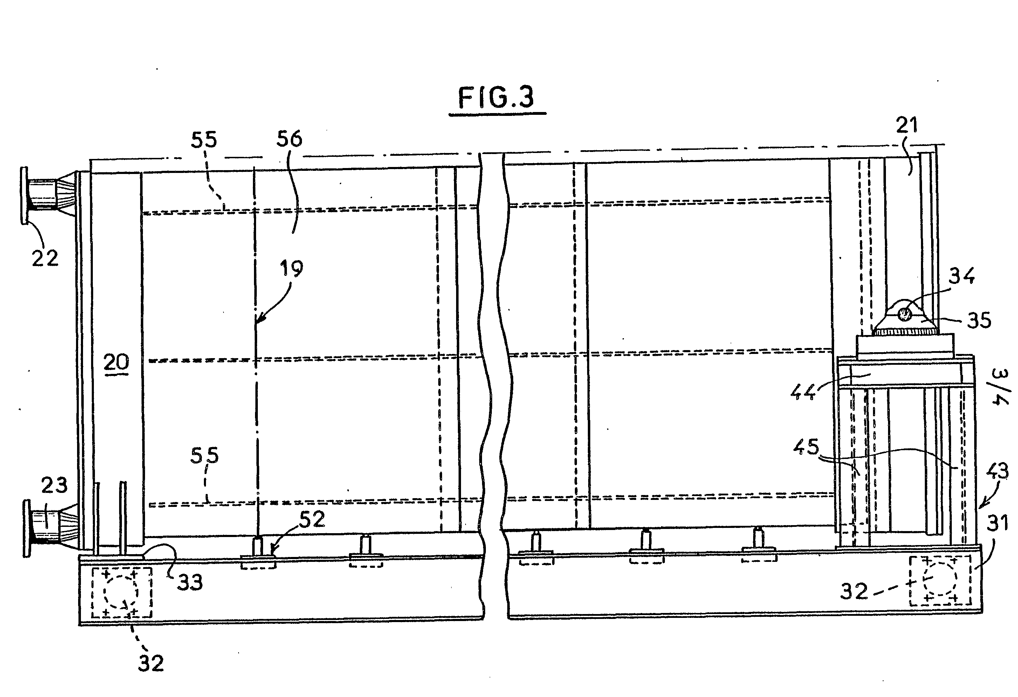

Comme représenté sur la Fig. 3, la première boîte de connexion 20 est fixée sur chacune des poutrelles 31 par l'intermédiaire de plaques boulonnées 33 solidaires de la boîte de connexion 20.

Comme représenté sur les Fig. 2 à 5, la

**0 057 801**

seconde boîte de connexion 21 comprend de part de d'autre environ à mi-hauteur deux tronçons d'arbres 34 de rotation horizontaux et orthogonaux aux tubes T tourillonnant dans des paliers 35 comportant des coussinets 36. Chaque tronçon d'arbre 34 est maintenu en place par rapport au palier 35 par deux flasques 37. De plus, des nervures 38 de renforcement sont soudées à la paroi 39 de la chambre 21, aux tronçons d'arbre 34 et au flasque 37 en regard.

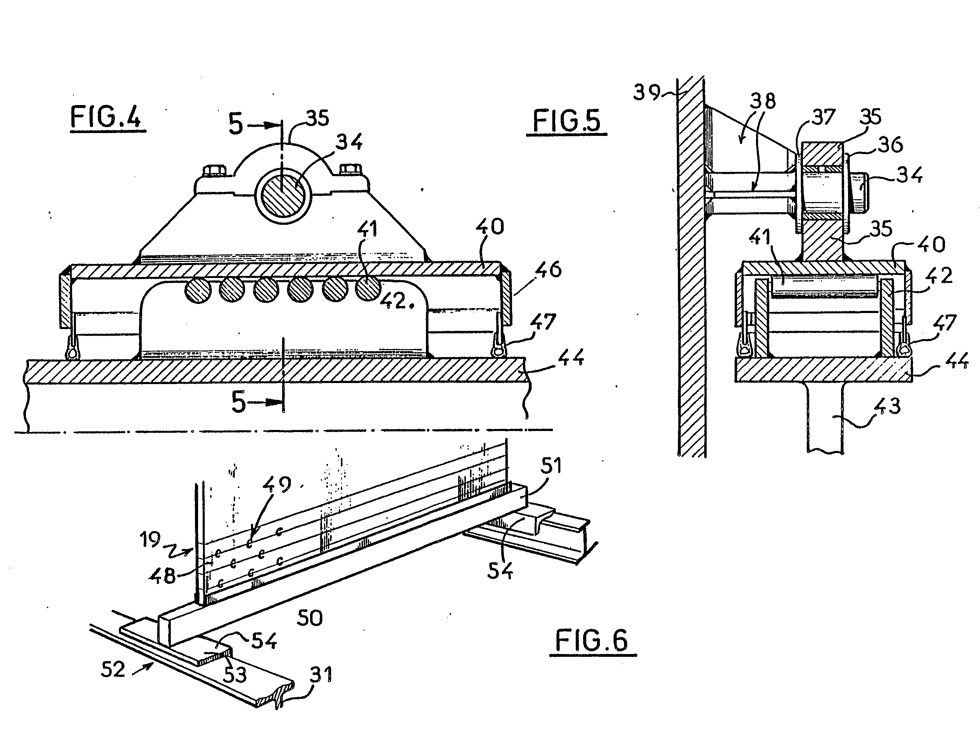

Comme représenté sur les Fig. 4 et 5, chaque palier 35 est supporté par une plaque horizontale 40 qui repose sur six cylindres 41 tournant dans des paliers fixes 42. Les paliers 42 reposant eux-mêmes sur un bâti 43 comportant une poutrelle 44 horizontale sur laquelle sont soudés les paliers 42 et deux poutrelles verticales 45 fixées à leur partie inférieure à une poutrelle 31. Les cylindres 41 sont en outre protégés par des flasques verticaux 46 soudés à la plaque 40 et prolongés vers le bas par un joint da caoutchouc 47 glissant sur la poutrelle 44.

Comme représenté sur la Fig. 6, chaque dispositif d'entretoisement 19 comprend un empilement de barrettes 48 pourvues d'encoches semi-circulaires délimitant entre elles des ouvertures 49 pour le passage des tubes. Ces barrettes sont en matière plastique et se clipsent les unes sur les atures.

Chaque barrette inférieure est supportée par un profilé métallique en U 50 fixé à la partie supérieure d'une barre transversale 51 comportant à chacune de ses extrémités dans patins de glissement 52 en forme de L comprenant chacun une face horizontale plane 53 dont la surface inférieure est munié d'une couche de polyéthylène et repose sur une poutrelle 31 et une face verticale 54 le long du bord interne des poutrelles 31.

Comme représenté sur les Fig. 2 et 3, les dispositifs d'entretoisement sont munis sur chacun de leurs bords latéraux de trois tubes métalliques 55 disposés respectivement en haut, au milieu et en bas et prenant la place de tubes en matière plastique. Sur ces tubes métalliques, sont fixées de chaque côté de la batterie de tubes 13 plusieurs plaques 56 en matière plastique se chevauchant dans le sens longitudinal.

Ces plaques constituent un guide pour limiter le passage de l'air uniquement entre les tubes de la batterie. Le guidage de l'air est en outre assuré par des tampons élastiques longitudinaux 57 disposés au bas des plaques 56 et des tampons élastiques longitudinaux 58 disposés au haut des plaques 56.

Le fonctionnement du réfrigérant atmospherique est tout à fait classique. Comme indiqué précédemment, l'eau à redroidir arrivant par la conduite d'admission rentre à la partie supérieure de la boîte de connexion 20 et parcourt quatre fois la longueur de la batterie 13 avant de ressortir à la partie inférieure de la boîte de connexion 20. Au cours de cette circulation dans les tubes T de la batterie, l'eau est refroidie progressivement par l'air atmospherique qui, pénétrant par les entrées d'air 4, 5 traverse la batterie 13 par les interstices ménagés entre les tubes T, puis est aspiré hors de la chambre 1 par les ventilateurs 11. Pour améliorer la transmission de chaleur de la paroi des tubes T à l'air atmosphérique, il est prévu, comme connu en soi, un dispersion d'eau sur les tubes. Cette dispersion d'eau est assurée par le réseau de distribution 14 et les ajutages 15 et l'eau dispersée s'écoulant dans la batterie 13 est recueillie dans le bassin 17, puis remise en circulation par le circuit 18 dans le réseau 14. D'autre part, les panneaux séparateurs de gouttes 16 prévue au-dessus au réseau de distribution 14 permettent de piéger les gouttes en suspension dans l'air atmosphérique et qui sont entraînées vers le haut par celui-ci.

Lorsque le réfrigérant passe de son état hors service à son état de fonctionnement, les tubes T passent de la température ambiante de l'ordre de 10 à 20°C à une température de l'ordre de 80 à 90°C et il en résulte pour les tubes en matière plastique un allongement important, dix à quinze fois supérieur à celui de tubes d'acier de même longueur, qui peut dépasser une diazine de centimètres pour des tubes d'une quinzaine de mètre de long environ. Cette dilatation peut s'effectuer librement grâce à la mobilité horizontale à la fois des dispositifs d'entretoisement et de la seconde boîte de connexion par rapport aux poutrelles de support. Le déplacement est aisément obtenu sous l'action de deux efforts de même sens, l'un étant la poussée de fond due à la pression statique et à la pression dynamique de l'eau dans les boîtes de connexion et l'autre, plus faible, étant la poussée correspondant à la dilatation des tubes.

Comme indiqué précédemment, il se produit également une différence de dilatation entre les tubes correspondant aux différentes passes de l'eau, les tubes inférieurs atteignant une température moins élevée que celle des tubes supérieurs. Cette dilatation différenciée s'effectue également librement grâce à la rotation de la seconde boîte de connexion et à la flexibilité suffisante des dispositifs d'entretoisement constituées par les barrettes en matière plastique.

**Revendications**

1. Echangeur de chaleur entre un premier fluide et au moins un second fluide, due type comprenant:

a) une batterie (13) horizontale de tubes rectilignes de grande longueur, réunis de distance en distance par des dispositifs d'entretoisement (19) et dans lesquels circule le premier fluide,

b) une structure de support pour cette batterie,

c) une première boîte de connexion (20) à laquelle sont raccordés de façon étanche lesdits tubes à l'une de leurs extrémités et divisée par au moins une cloison (24) en au moins une chambre d'entrée (25) et une chambre de sortie (27) du premier fluide, ladit boîte de connexion (20) étant montée de façon fixe sur ladite structure de support, et

d) une seconde boîte de connexion (21) à laquelle sont raccordés de façon étanche lesdits tubes à leurs autres extrémités, ladite seconde boîte de connexion (21) étant montée de façon mobile par rapport à ladite structure de support, ledit échangeur étant caractérisé en ce que ladite structure de support comprend au moins deux poutres (31) horizontales parallèles à la batterie de tubes, disposées de part et d'autre de cette batterie et sur lesquelles reposent la première boîte de connexion (20), les dispositifs d'entretoisement (19) et la seconde boîte de connexion (21), les dispositifs d'entretoisement (19) étant flexibles dans la direction des tubes et reposant sur lesdites poutres (31) par des patins de glissement (52) et la seconde boîte de connexion (21) étant munie de part et d'autre de tronçons d'arbres (34) de rotation horizontaux et orthogonaux aux tubes, tourillonnant dans des paliers (35) qui sont montés sur lesdites poutres (31) de façon mobile dans la direction des tubes.

2. Echangeur selon la revendication 1, caractérisé en ce que les deux poutres (31) sont maintenues entre elles par au moins deux traverses (32) qui sont disposées à leurs extrémités de façon à former un cadre rigide.

3. Echangeur selon la revendication 1 ou la revendication 2, caractérisé en ce que les tronçons d'arbres (34) de rotation sont fixés sensiblement au milieu de la hauteur de la second boîte de connexion (21).

4. Echangeur selon l'une quelconque des revendications 1 à 3, caractérisé en ce que les paliers mobiles (35) reposent sur des cylindres (41) tournant dans des paliers (42) fixes disposés sur chacune des poutres (31).

5. Echangeur selon l'une quelconque des revendications 1 à 4, caractérisé en ce que les dispositifs d'entretoisement (19) sont constitués de barrettes (48) en matière plastique qui sont pourvues d'encoches semi-circulaires délimitant entre elles des ouvertures (49) pour le passage des tubes, qui se clipsent les unes sur les autres et dont la barrette inférieure est supportée par un profilé métallique un U (50).

6. Echangeur selon l'une quelconque des revendications 1 à 5, caractérisé en ce que les dispositifs d'entretoisement sont munis sur chacun de leurs bords latéraux de tubes métalliques (55) sur lesquels sont fixées des séries de plaques (56) se chevauchant.

7. Réfrigérant atmosphérique du type comprenant une chambre (1) pourvue à sa base d'au moins une ouverture d'entrée d'air (4, 5), un dispositif d'échange thermique (12) entre un fluide et l'air atmosphérique disposé à l'intérieur de la chambre et des moyens (11) pour évacuer l'air atmosphérique à la partie supérieure de la chambre, caractérisé en ce que le dispositif d'échange thermique comprend au moins un échangeur de chaleur suivant l'une quelconque des revendications 1 à 6.

**Patentansprüche**

1. Wärmetauscher zwischen einem ersten und wenigstens einem zweiten Fluid, mit:

a) einer horizontalen Batterie (13) geradliniger Rohre großer Länge, die in gewissen Abständen durch Verstrebungseinrichtungen (19) verbunden sind und in welchen das erste Fluid zirkuliert,

b) einer Tragkonstruktion für die Batterie,

c) einem ersten Anschlußkasten (20), an den die Rohre an einem ihrer Enden abgedichtet angeschlossen sind und der durch wenigstens eine Trennwand (24) in zumindest eine Eintrittskammer (25) und ein Austrittskammer (27) des ersten Fluids geteilt ist, wobei der erste Anschlußkasten (20) auf der Tragkonstruktion festmontiert ist, und mit

d) einem zweiten Anschlußkasten (21), an den die Rohre an ihren anderen Enden abgedichtet angeschlossen sind, wobei der zweite Anschlußkasten (21) gegenüber der Tragkonstruktion beweglich montiert ist, dadurch gekennzeichnet, daß die Tragkonstruktion wenigstens zwei horizontale, zu der Batterie von Rohren parallele Träger (31) aufweist, die beidseitig der Batterie angeordnet sind und auf welchem der erste Anschlußkasten (20), die Verstrebungseinrichtungen (19) und der zweite Anschlußkasten (21) gelagert sind, wobei die Verstrebungseinrichtungen (19) in Richtung der Rohre flexibel und auf den Trägern (31) durch Gleitkufen (52) gelagert sind, und daß der zweite Anschlußkasten (21) beidseitig mit horizontalen, zu den Rohren rechtwinkligen Achsstaummeln (34) ausgerüstet ist, welche sich in Lagern (35) drehen, die auf den Trägern (31) in Richtung der Rohre beweglich angebracht sind.

2. Wärmetauscher nach Anspruch 1, dadurch gekennzeichnet, daß die zwei Träger (31) untereinander durch wenigstens zwei Querträger (32) gehalten sind, die an ihren Enden so angeordnet sind, daß ein steifer Rahmen gebildet ist.

3. Wärmetauscher nach Anspruch 1 oder 2, dadurch gekennzeichnet, daß die Achsstummel (34) genau in der Mitte der Höhe des zweiten Anschlußkastens (21) angebracht sind.

4. Wärmetauscher nach einem der Ansprüche 1 bis 3, dadurch gekennzeichnet, daß die beweglichen Lager (35) auf Walzen (41) gelagert sind, die sich in auf jedem Träger (31) angeordneten festen Lagern (42) drehen.

5. Wärmetauscher nach einem der Ansprüche 1 bis 4, dadurch gekennzeichnet, daß die Verstrebungseinrichtungen (19) von Stegen (48) aus Kunststoff gebildet sind, welche halbkreisförmige Aussparungen aufweisen, die Öffnungen (49) für den Durchlaß der Rohre begrenzen und die sich aufeinanderklemmen, wobei der unterste Steg von einem U-Profil (50) aus Metall getragen wird.

6. Wärmetauscher nach einem der Ansprüche 1 bis 5, dadurch gekennzeichnet, daß die Verstrebungseinrichtungen an jeder ihrer Seitenkanten mit Metallrohren (55) versehen sind, auf welchen Serien von sich überlappenden Platten (56) befestigt sind.

7. Kühlturm mit einer Kammer (1), an deren Basis wenigstens eine Lufteintrittsöffnung (4, 5) vorgesehen ist, mit einer Wärmeaustauschvorrichtung (12) für den Wärmeaustausch zwischen einem Fluid und atmosphärischer Luft, die im Inneren Kammer (1) angeordnet ist, und mit Einrichtungen (11) zum Evakuieren der atmosphärischen Luft im obersten Teil der Kammer (1), dadurch gekennzeichnet, daß die Wärmeaustauschvorrichtung (12) wenigstens einen Wärmeaustauscher gemäß einem der Ansprüche 1 bis 6 aufweist.

## Claims

1. An exchanger for exchanging heat between a first fluid and at least a second fluid, of the type comprising:

a) a horizontal battery (13) of rectilinear tubes of great length interconnected at intervals by spacer devices and in which the first fluid flows,

b) a support structure for said battery,

c) a first connection box (20) to which said tubes are connected in a sealed manner at one of their ends, and which is divided by at least one partition wall (24) into at least an inlet chamber (25) and, an outlet chamber (27) for the first fluid, said connection box (20) being fixed on said support structure, and

d) a second connection box, (21) to which there are connected in a sealed manner said tubes at their opposite ends, said second box (21) being mounted to be movable relative to said support structure, said exchanger being characterized in that said support structure comprises at least two horizontal beams (31) parallel to the battery of tubes and disposed on each side of said battery and on which bear the first connection box (20), the spacer devices (19) and the second connection box (21), the spacer devices (19) being flexible in the direction of the tubes and bearing on said beams (31) through sliding shoes (52) and the second connection box (21) being provided on each side with rotatable shaft sections (34) which are horizontal and orthogonal to the tubes and journalled in bearings (35) which are mounted on said beams (31) to be movable in the direction of the tubes.

2. An exchanger according to claim 1, characterized in that the two beams (31) are maintained with respect to each other by at least two crossed-members (32) which are disposed at their ends so as to form a rigid frame.

3. An exchanger according to claim 1 or 2, characterized in that the rotatable shaft sections (34) are mounted substantially mid-way of the height of the second connection box (21).

4. An exchanger according to anyone of claims 1 to 3, characterized in that the movable bearings (35) bear on cylinders (41) which are rotatable in fixed bearing (42) disposed on each of the beams (31).

5. An exchanger according to any of the claims 1 to 4, characterized in that the spacer devices (19) are formed by bars (48) of plastics material which are provided with semi-circular notches defining therebetween openings (49) for the passage of the tubes, said bars being clipped to each other and the lower bar being supported by a metal U-section member (50).

6. An exchanger according to any one of the claims 1 to 5, wherein the spacer devices are provided on each of their lateral edges with metal tubes (55) to which a series of overlapping plates (56) are fixed.

7. An atmospheric cooler of the type comprising a chamber (1) provided at its base with at least one air inlet opening (4, 5), an exchanger device (12) for exchanging heat between a fluid and the air of the atmosphere disposed within the chamber, and means (11) for discharging the air of the atmosphere in the upper part of the chamber, characterized in that the heat exchanger device comprises at least one heat exchanger according to any one of the claims 1 to 6.

FIG.1

FIG.2

FIG.3

0 057 801

3/4

FIG.4

FIG.5

5 → 35

34

41

40

46

42.

47

5 →

44

39

38

37   35

36

34

41

35   40

42

47

44

43

0 0 5 7 8 0 1

4

49

51

19

48

54

50

54

52

53

31

FIG.6